# EUROPEAN PATENT APPLICATION

(11) **EP 4 579 934 A1**
(43) Date of publication of application: **02.07.2025**
(21) Application number: 24205906.1
(22) Date of filing: 10.10.2024
(51) Int. Cl.: H01M 50/543, H01M 50/553, H01M 50/562

(54) **BATTERY PACK CONNECTOR AND BATTERY PACK**

(30) Priority: 29.12.2023 CN 202323669292 U; 31.07.2024 WO PCT/CN2024/109005
(71) Applicant: Eve Energy Co., Ltd., Huizhou, Guangdong 516006 (CN)
(72) Inventor: CHEN, Jianbao, Huizhou, Guangdong, 516006 (CN)
(74) Representative: Murgitroyd & Company

(57) **Abstract**

A battery pack connector and a battery pack are provided. The connector may be configured to electrically connect a battery module inside the battery pack with an electric device outside the battery pack and include an insulation base (100) and a connection portion (200). The insulation base (100) may be provided with a first through hole (110). The connection portion (200) may be embedded in the first through hole (110) and fixed to the insulation base (100), and both ends of the connection portion (200) extend out of the insulation base (100).

## Description

### TECHNICAL FIELD

The present disclosure relates to the field of battery technologies, and more particular to a battery pack connector and a battery pack.

### BACKGROUND

A battery pack may generally output a current to the outside by using a connector, and the connector may be generally mounted or embedded onto a box of the battery pack. The connector in the related art is mainly embedded in a plastic upper cover of the box of the battery pack and insulated by the box itself, but the connector cannot be applied to the battery pack of which the box has a metal material.

### SUMMARY

However, a connector suitable for the battery pack of which the box has a metal material is mostly in the form of a high-voltage connector assembly, and there are problems such as complex structure and poor adaptability of the connector assembly, and the like.

The present disclosure provides a battery pack connector. The connector may be configured to electrically connect a battery module inside the battery pack with an electric device outside the battery pack and include an insulation base and a connection portion. The insulation base may be provided with a first through hole and include a first surface and a second surface opposite to the first surface, where the first through hole penetrates through the first surface and the second surface. The connection portion may be embedded in the first through hole and fixed to the insulation base, and both ends of the connection portion extend out of the insulation base.

The present application further provides a battery pack. The battery pack may include a box, a battery module located in the box and the battery pack connector described above, where the connector is fixed to the box of the battery pack.

The present disclosure provides a battery pack connector and a battery pack. The battery pack connector includes an insulation base and a connection portion, where the insulation base is provided with a first through hole, the connection portion is embedded in the first through hole and fixed to the insulation base, both ends of the connection portion extend out of the insulation base, so that a connecting row inside the battery pack and a connecting row outside the battery pack are connected to the connection portion. The insulation base is fixed to a box of the battery pack and can be applied to the battery pack having a metal box. One end of the connection portion is connected to a battery module inside the battery pack, and another end of the connection portion is connected to an electric device outside the battery pack to realize outputting of the current. The battery pack connector according to the present disclosure has the advantages of simple structure, strong adaptability, and the like.

### BRIEF DESCRIPTION OF THE DRAWINGS

FIG. 1 is a schematic structural diagram of a battery pack connector according to some embodiments of the present disclosure.
FIG. 2 is an exploded diagram of the structure of a battery pack connector according to some embodiments of the present disclosure.
FIG. 3 is a schematic structural diagram of a connection portion of a battery pack connector according to some embodiments of the present disclosure.
FIG. 4 is a schematic diagram of a first surface of an insulation base of a battery pack connector according to some embodiments of the present disclosure.
FIG. 5 is a schematic diagram of a second surface of an insulation base of a battery pack connector according to some embodiments of the present disclosure.
FIG. 6 is a schematic diagram of fitting of a battery pack connector and a box of the battery pack according to some embodiments of the present disclosure.
FIG. 7 is a partially enlarged diagram of fitting of a battery pack connector and a box of the battery pack according to some embodiments of the present disclosure.

Description of reference signs: 100-Insulation base, 101-First surface, 102-Second surface, 110-First through hole, 111-First limiting portion, 112-Groove, 120-First boss, 130-Third boss, 131-Third limiting portion, 132-Fifth limiting portion, 140- Second through hole, 150-Fourth boss, 151-First nut, 152-Positioning hole, 200-Connection portion, 201-First end, 202-Second end, 210-Connection rod, 300-Second boss, 301-First end surface, 302-Second end surface, 310-First groove, 320-First sub-boss, 321-Fourth limiting portion, 330-Second sub-boss, 331-Second limiting portion, 400-Waterproof sealing ring, 410-Third through hole, 420-Fourth through hole, 500-Copper bar, 510-Second nut, 600-box, 610-Fifth through hole, and 620-Sixth through hole.

### DETAILED DESCRIPTION

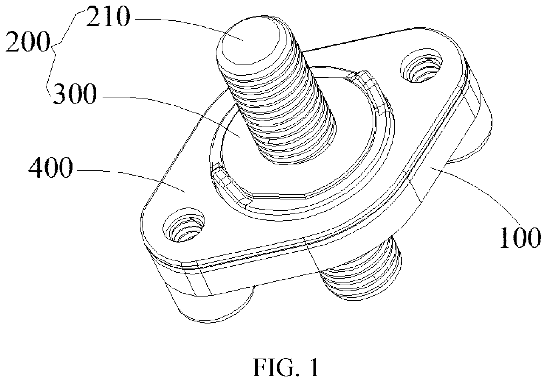

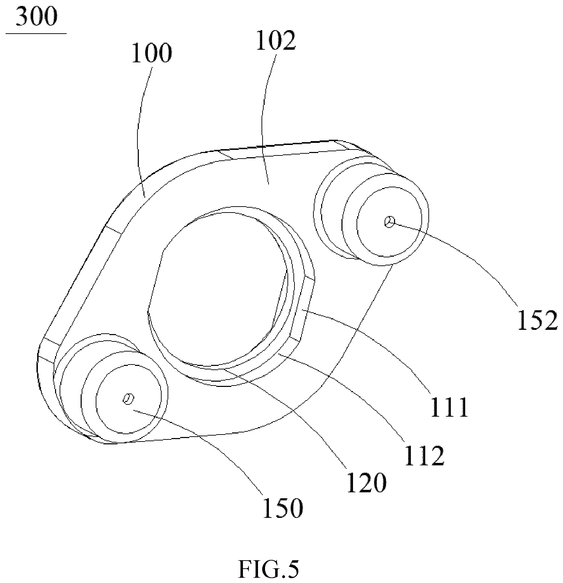

As shown in FIGS. 1 to 5, there is provided a battery pack connector. The connector may be configured to electrically connect a battery module inside the battery pack with an electric device outside the battery pack, and include an insulation base 100 and a connection portion 200. The battery module of some embodiments of the present disclosure may be a module in which an end plate and a strap in the Module to Pack (MTP) are integrated with a plurality of cells, or may be a plurality of cells integrated in the Cell to Pack (CTP).

The insulation base 100 may be provided with a first through hole 110, and include a first surface 101 and a second surface 102 opposite to the first surface 101, where the first through hole 110 penetrates through the first surface 101 and the second surface 102. In the present embodiments, the first surface 101 may be fixed to a box 600, and the second surface 102 may be located at a side of the first surface 101 away from a side wall of the box.

The connection portion 200 may be embedded in the first through hole 110 and fixed to the insulation base 100, and both ends of the connection portion 200 may extend out of the insulation base 100. The structure of the connector is simple, and various types of connection bars inside the battery pack and various types of connection bars outside the battery pack are connected to the connection portion 200, so that the adaptability of the connector is strong.

One of an inner side wall of the first through hole 110 or the connection portion 200 may be provided with a boss, and another of the inner side wall of the first through hole 110 or the connection portion 200 may be provided with a groove in which the boss is received, so as to keep the insulation base 100 and the connection portion 200 relatively fixed.

In some embodiments of the present disclosure, the inner side wall of the first through hole 110 has a first boss 120 disposed circumferentially along the first through hole 110, the connection portion 200 includes a connection rod 210 and a second boss 300 surrounding an outer side wall of the connection rod 210, an outer side wall of the second boss 300 away from the connection rod 210 is provided with a first groove 310 matching the first boss 120, the second boss 300 is inserted into the first through hole 110 and fixed to the insulation base 100, and the first boss 120 is received in the first groove 310 to limit the connection rod 210, so as to prevent the connection rod 210 from coming out of the first through hole 110.

The connection rod 210 has opposite first and second ends 201 and 202 in an extending direction of the connection rod 210 (i.e., a direction perpendicular to the insulation base 100). The second boss 300 has opposite first and second end surfaces 301 and 302, where the first end 201 extends out of the first end surface 301, the second end 202 extends out of the second end surface 302, and the first end 201 extends out of the first surface 101 and the second end 202 extends out of the second surface 102.

The connection rod 210 and the second boss 300 may be formed by connecting split-type structural members, or may be an integral structure. The connection rod 210 may be a double-end bolt, both ends of which are threaded to facilitate attachment of the connection rod to other connection members by means of a nut. The insulation base may be made of an insulation material such as plastic, and may be insulated from the metal box.

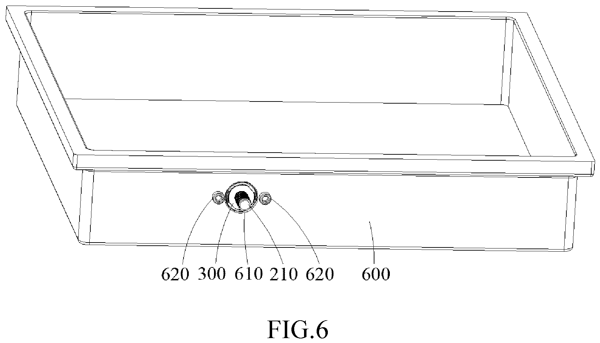

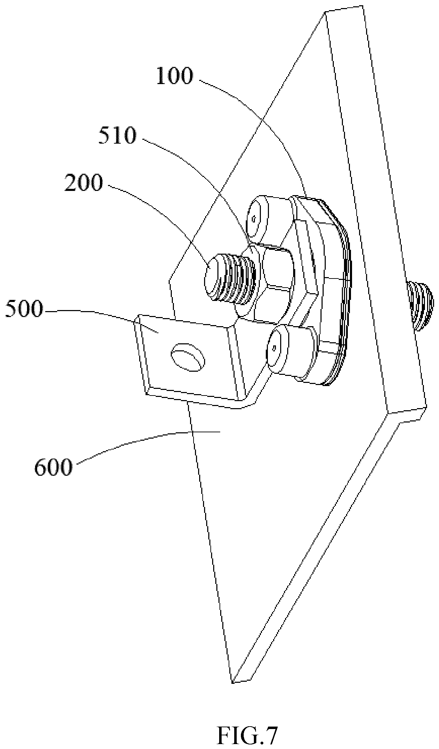

In the present disclosure, as shown in FIGS. 6 to 7, the battery pack connector is configured to be fixed to the box 600 of the battery pack to output a current to the outside, and the connector may be directly connected to the battery module inside the battery pack or to an electric device outside the battery pack, or may be connected to the battery pack by an intermediate adapter, which is not specifically limited herein. The insulation base 100 of the connector may be directly fixed to the box 600, the connection rod 210 penetrates through the side wall of the box 600, the second end 202 of the connection rod 210 extends into the box 600 to be connected to the copper bar 500 inside the battery pack, and the first end 201 of the connection rod 210 extends out of the box 600 to be connected to a device outside the battery pack into which a current needs to be input, thereby realizing outputting of the current.

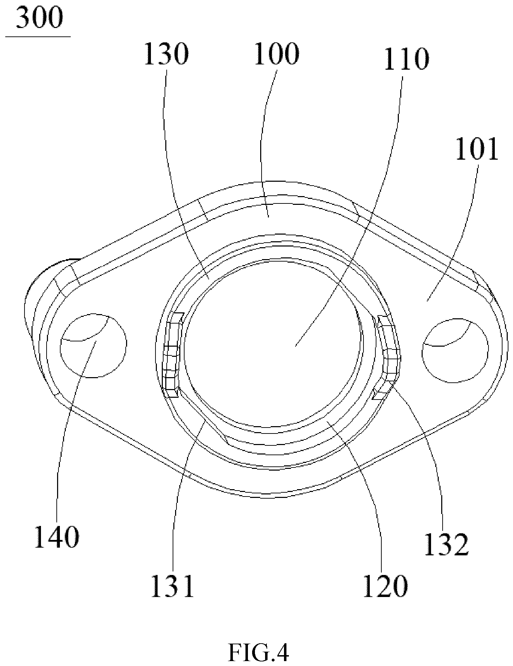

In one embodiment of the present disclosure, as shown in FIGS. 4 to 5, the first surface 101 is provided with a third boss 130, which is insulated and disposed continuously or intermittently around the first through hole 110. The third boss 130 may be made of an insulation material such as plastic. When the first surface 101 is in contact with the surface of the box 600, the third boss 130 functions to insulate the box 600 from the connection portion 200. In a process of forming the first boss 120, a through hole may be provided first in a central portion of the insulation base 100 and extend through the first surface 101 and the second surface 102, and then a groove 112 may be provided on the second surface 102 around the through hole and have an inner diameter greater than the inner diameter of the through hole to form the first boss 120, and then the third boss 130 is formed on the first surface 101 around the through hole and have the same inner diameter as the groove 112, and the through hole, the groove 112, and the third boss 130 have the same central axis (in the direction perpendicular to the insulation base 100).

In some embodiments of the present disclosure, the third boss 130 may be integrally formed with the insulation base 100, the inner diameter of the third boss 130 coincides with the inner diameter of the first through hole 110, and then the first boss 120 is formed in the first through hole 110.

In some embodiments of the present disclosure, the insulation base 100, the first boss 120, and the third boss 130 may also be integrally formed by a mold.

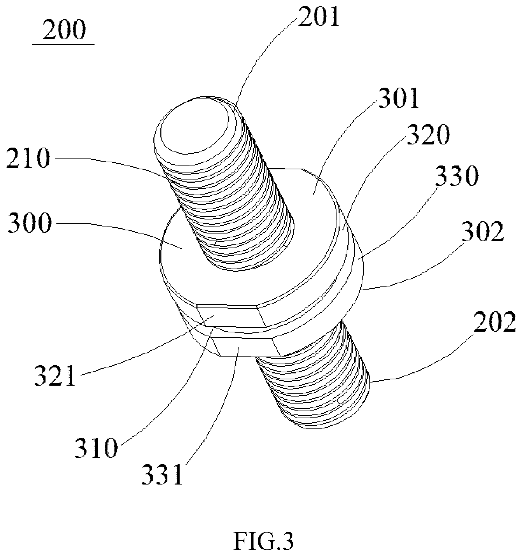

In one embodiment of the present disclosure, as shown in FIGS. 3 to 5, the inner side wall of the first through hole 110 is further provided with a first limiting portion 111, and the connection portion 200 is further provided with a second limiting portion 331 matching the first limiting portion 111, so that the second boss 300 is fixed to the insulation base 100, thereby preventing the connection portion 200 from rotating in the circumferential direction in the first through hole 110. Specifically, the second limiting portion 331 may be provided on the outer side wall of the second boss 300. The first through hole 110 may be a circular through hole, the first limiting portion 111 may be a protrusion structure disposed on the inner side wall of the first through hole 110, the second boss 300 may be a circular boss, and the second limiting portion 331 may be a recess structure disposed on the outer side wall of the second boss 300 and matching the shape and the size of the first limiting portion 111. When the second boss 300 is fitted in the first through hole 110, the first limiting portion 111 is engaged with the second limiting portion 331, so that the second boss 300 is fixed to the insulation base 100, thereby preventing the connection portion 200 from rotating in the circumferential direction in the first through hole 110.

In one embodiment of the present disclosure, as shown in FIGS. 3 to 5, the inner side wall of the third boss 130 toward the first through hole 110 may be provided with a third limiting portion 131, and the connection portion 200 may be further provided with a fourth limiting portion 321 matching the third limiting portion 131. Specifically, the fourth limiting portion 321 may be provided on the outer side wall of the second boss 300. The second boss 300 is divided by the first groove 310 into a first sub-boss 320 and a second sub-boss 330 located on both sides of the first groove 310, where the second limiting portion 331 is provided on the second sub-boss 330, and the fourth limiting portion 321 is provided on the first sub-boss 320. The third limiting portion 131 may be a protrusion structure disposed on the inner side wall of the first through hole 110, and the fourth limiting portion 321 may be a recess structure disposed on the outer side wall of the second boss 300 and matching the protrusion structure. When the second boss 300 is fitted in the first through hole 110, the second limiting portion 331 is engaged with the first limiting portion 111, and the fourth limiting portion 321 is engaged with the third limiting portion 131, so that the connection stability between the connection portion 200 and the insulation base 100 can be further improved, thereby preventing the connection portion 200 from rotating in the circumferential direction in the first through hole 110.

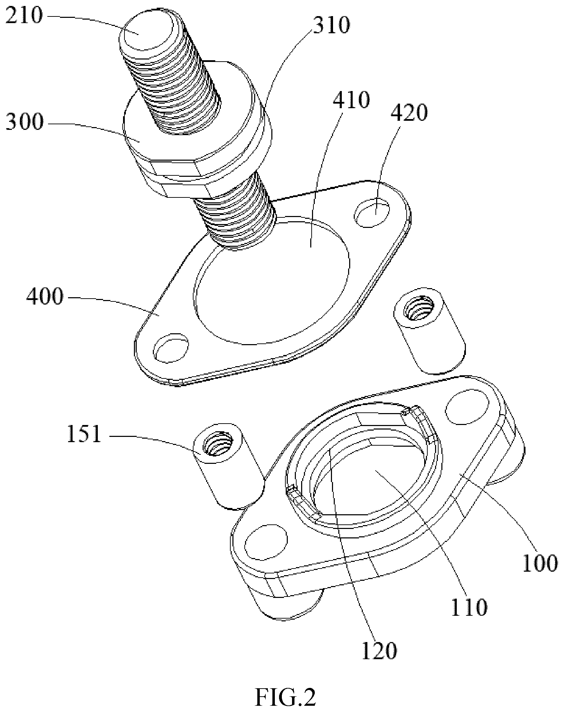

In one embodiment of the present disclosure, as shown in FIGS. 2 and 4, one side of the third boss 130 away from the first surface 101 is provided with a fifth limiting portion 132, and a connection bar of an external electric device is limited by the fifth limiting portion 132, so as to avoid rotation of the connection bar along the circumferential direction of the connection rod 210 and ensure the robustness of connecting the connection bar with the connector. In the present embodiment, the fifth limiting portion 132 includes at least two protrusions extending in a direction away from the first surface 101. The protrusions may be perpendicular to the insulation base 100. When the insulation base 100 is fixed to the box 600, the fifth limiting portion 132 is protruded from the outer surface of the box 600, and when the third boss 130 is provided with two protrusions, the two protrusions are arranged symmetrically with respect to the central axis of the first through hole 110. The first end 201 of the connection rod 210 may be connected to an external wiring harness or an external device by a connection bar passing through the first end 201 of the connection rod 210 and fixed between the two projections, so that the connection bar is limited by the pair of protrusions, so as to avoid rotation of the connection bar along the circumferential direction of the connection rod 210 and ensure the robustness of connecting the connection bar with the connector.

In one embodiment of the present disclosure, as shown in FIG. 4, the insulation base 100 is further provided with at least one second through hole 140 configured to be fixed to the box 600 by a fastener. The insulation base 100 may be a diamond, the first through hole 110 may be provided at the center of the insulation base 100, and the insulation base 100 may be provided with two second through holes 140 respectively located at both sides of the first through hole 110. When the insulation base 100 is fixed to the box 600, a bolt may pass through the box 600 and the second through hole 140 to fix the insulation base 100 to the box 600.

In one embodiment of the present disclosure, as shown in FIGS. 2, 4, and 5, a hollow fourth boss 150 is provided on the second surface 102. The fourth boss 150 covers the second through hole 140 and communicates with the second through hole 140 to form a blind hole in which a first nut 151 is fixed. The fourth boss 150 may be a cylindrical groove structure and have two opposite ends in a direction perpendicular to the insulation base 100, where one end of the fourth boss 150 close to the second through hole 140 is an opening, and another end of the fourth boss 150 away from the second through hole 140 is a bottom. The opening end of the fourth boss 150 communicates with the second through hole 140, and a first nut 151 is provided in the groove of the fourth boss 150. When the insulation base 100 is fixed to the box 600, the first surface 101 of the insulation base 100 is attached to the surface of the box 600. The bolt may pass through the through hole of the box 600 to be inserted into the first nut 151, so that the insulation base 100 may be fixed to the box 600, which is simple to operate.

One end of the blind hole away from the second through hole 140 is provided with a positioning hole 152, that is, a bottom of the fourth boss 150 is provided with a through hole penetrating through the bottom, and the positioning hole 152 is used for a mold thimble demolding.

In one embodiment of the present disclosure, as shown in FIG. 2, the first surface 101 of the insulation base 100 is further provided with a waterproof sealing ring 400 installed between the insulation base 100 and the box 600, so as to improve the waterproof level and prevent external water or liquid from being immersed in the box 600 of the battery pack. The shape of the waterproof sealing ring 400 may be the same as that of the insulation base 100, and the waterproof sealing ring 400 is provided with a third through hole 410 corresponding to the first through hole 110 and a fourth through hole 420 corresponding to the second through hole 140, so that the connection rod 210 and the fastener pass through the waterproof sealing ring 400. The inner diameter of the third through hole 410 may be greater than or equal to the outer diameter of the third boss 130, and the thickness of the waterproof sealing ring 400 may coincide with the thickness of the third boss 130 in the direction perpendicular to the insulation base 100. The waterproof sealing ring 400 may be sleeved on the periphery of the third boss 130, and the third boss 130 can limit the position of the waterproof sealing ring 400, thereby avoiding displacement of the waterproof sealing ring 400 in the direction parallel to the insulation base 100.

The present disclosure may further provide a battery pack, including: a box 600, a battery module located in the box 600, and the battery pack connector as described above, where the connector is fixed to the box 600 of the battery pack.

As shown in FIGS. 6 to 7, the connector may be fitted onto a side wall of the box 600 where a fifth through hole 610 corresponding to the first through hole 110 and a sixth through hole 620 corresponding to the second through hole 140 are provided. The connector may be fitted onto an inner side of the box 600, where the first surface 101 of the insulation base 100 is attached to the inner side wall of the box 600, the first through hole 110 corresponds to the fifth through hole 610, the first end 201 of the connection rod 210 passes through the fifth through hole 610 to be connected to an external wiring harness or an external device, the second end 202 of the connection rod 210 is located in the box 600 to be connected to a copper bar 500 of the battery module, and the second end 202 of the connection rod 210 passes through a hole reserved in the copper bar 500 and is bolted by a second nut 510. The second through hole 140 corresponds to the sixth through hole 620, and the bolt sequentially passes through the sixth through hole 620 and the second through hole 140 is bolted by a first nut 151, so that the connector is fixed to the box 600 and connected to the copper bar 500 of the box 600, thereby outputting the current of the battery pack to the outside of the battery pack.

The waterproof sealing ring 400 may be further provided between the first surface 101 of the insulation base 100 and the inner side wall of the box 600, so as to prevent the external water or liquid from being immersed in the box 600 of the battery pack and meeting IP67 protection level.

In some embodiments of the present disclosure, the material of the box 600 may be a metal or a plastic, which is not specifically limited herein. The battery pack may be a low-voltage battery pack or a high-voltage battery pack. The battery pack connector may be preferably applied to the low-voltage battery pack, but may also be applied to the high-voltage battery pack.

## Claims

1. A battery pack connector for electrically connecting a battery module inside a battery pack with an electric device outside the battery pack, **characterized in that** the battery pack connector comprises: an insulation base (100) and a connection portion (200);
the insulation base (100) is provided with a first through hole (110) and comprises a first surface (101) and a second surface (102) opposite to the first surface (101), wherein the first through hole (110) penetrates through the first surface (101) and the second surface (102); and
the connection portion (200) is embedded in the first through hole (110) and fixed to the insulation base (100), and both ends of the connection portion (200) extend out of the insulation base (100).

2. The battery pack connector of claim 1, **characterized in that** one of an inner side wall of the first through hole (110) or the connection portion (200) is provided with a boss, and another of the inner side wall of the first through hole (110) or the connection portion (200) is provided with a groove in which the boss is received.

3. The battery pack connector of claim 2, **characterized in that** the inner side wall of the first through hole (110) has a first boss (120) disposed circumferentially along the first through hole (110); and
the connection portion (200) comprises a connection rod (210) and a second boss (300) surrounding an outer side wall of the connection rod (210), an outer side wall of the second boss (300) away from the connection rod (210) is provided with a first groove (310) matching the first boss (120), and the second boss (300) is inserted into the first through hole (110).

4. The battery pack connector of claim 1, **characterized in that** the first surface (101) is provided with a third boss (130) that is insulated and disposed continuously or intermittently around the first through hole (110).

5. The battery pack connector of claim 1, **characterized in that** the inner side wall of the first through hole (110) is further provided with a first limiting portion (111), and the connection portion (200) is further provided with a second limiting portion (331) matching the first limiting portion (111).

6. The battery pack connector of claim 5, **characterized in that** the first limiting portion (111) is a protrusion structure disposed on the inner side wall of the first through hole (110), and the second limiting portion (331) is a recess structure disposed on the outer side wall of the second boss (300) and matching the protrusion structure.

7. The battery pack connector of claim 4, **characterized in that** the inner side wall of the third boss (130) toward the first through hole (110) is provided with a third limiting portion (131), and the connection portion (200) is further provided with a fourth limiting portion (321) matching the third limiting portion (131).

8. The battery pack connector of claim 4, **characterized in that** one side of the third boss (130) away from the first surface (101) is provided with a fifth limiting portion (132).

9. The battery pack connector of claim 8, **characterized in that** the fifth limiting portion (132) comprises at least two protrusions extending in a direction away from the first surface (101).

10. The battery pack connector of any one of claims 1-9, **characterized in that** the insulation base (100) is further provided with at least one second through hole (140), the second surface (102) is provided with a hollow fourth boss (150), and the fourth boss (150) covers the second through hole (140) and communicates with the second through hole (140) to form a blind hole in which a first nut (151) is fixed.

11. The battery pack connector of claim 10, **characterized in that** one end of the blind hole away from the second through hole (140) is provided with a positioning hole (152).

12. The battery pack connector of any one of claims 1-9, **characterized in that** the first surface (101) of the insulation base (100) is further provided with a waterproof sealing ring (400).

13. The battery pack connector of any one of claims 1-9, **characterized in that** the insulation base (100) is a diamond.

14. The battery pack connector of any one of claims 1-9, **characterized in that** the connection portion (200) is a double-end bolt.

15. A battery pack, **characterized in that** the battery pack comprises: a box (600), a battery module located in the box (600), and the battery pack connector of any one of claims 1-14, wherein the battery pack connector is fixed to the box (600) of the battery pack.
